# FASCICULE DE BREVET EUROPEEN

(11) **EP 2 454 808 B1**
(45) Date de publication et mention de la délivrance du brevet: **04.03.2015**
(21) Numéro de dépôt: 10745361.5
(22) Date de dépôt: 29.06.2010
(51) Int. Cl.: H02M 7/219

(54) **PONT REDRESSEUR DE COURANT POUR ALTERNATEUR POLYPHASE ET ALTERNATEUR POLYPHASE COMPORTANT UN TEL PONT**
GLEICHRICHTERBRÜCKE FÜR EINEN MULTIPHASENGENERATOR UND MULTIPHASENGENERATOR MIT EINER DERARTIGEN BRÜCKE
RECTIFIER BRIDGE FOR A POLYPHASE ALTERNATOR, AND POLYPHASE ALTERNATOR INCLUDING SUCH A BRIDGE

(30) Priorité: 17.07.2009 FR 0954960
(43) Date de publication de la demande: 23.05.2012
(73) Titulaire: Valeo Equipements Electriques Moteur, 94046 Créteil Cedex (FR)
(72) Inventeur: TAUVRON, Fabrice, F-91200 Athis-mons (FR); SEIDENBINDER, Régis, F-94600 Choisy Le Roi (FR); DOS SANTOS, Victor, F-71200 Le Creusot (FR)
(86) Numéro de dépôt international: PCT/FR2010/051346
(87) Numéro de publication internationale: WO 2011/007073

(56) Documents cités:
- EP-A- 0 331 559
- EP-A- 0 454 039
- WO-A-02/093717
- FR-A- 2 819 350

## Description

### Domaine de l'invention

La présente invention se rapporte à un pont redresseur de courant pour alternateur polyphasé, notamment de véhicule automobile.

Elle concerne également un alternateur polyphasé, notamment de véhicule automobile, comportant un tel pont.

### Etat de la technique

Ainsi qu'on le sait un alternateur polyphasé, notamment de véhicule automobile, comporte un stator, un rotor et au moins un pont redresseur de courant alternatif en courant continu comme décrit dans les documents WO 02/093717, FR 2 819 350 et EP 0 331 559 auxquels on se reportera pour plus de précisions.
Dans ces documents, il est prévu au moins un ventilateur pour refroidir l'alternateur, le stator est porté par un carter et des moyens de paliers, tels que des roulements, sont prévus pour que le stator et le rotor soient centrés mutuellement afin de garantir un entrefer entre la périphérie interne du stator et la périphérie externe du rotor.

Dans les documents WO 02/093717 et FR 2 819 350 l'alternateur est à ventilation interne, son rotor étant soit un rotor à griffes soit un rotor à pôles saillants. Ce rotor est solidaire d'un arbre relié à une poulie destinée à être entraînée en rotation par le moteur du véhicule via un dispositif de transmission de mouvement comportant au moins une courroie. Le rotor comporte au moins un bobinage inducteur et est configuré pour constituer un rotor inducteur via son bobinage inducteur. Le stator comporte un corps de stator portant un bobinage induit polyphasé. Lorsque l'arbre du rotor de l'alternateur tourne et lorsque le bobinage inducteur du rotor est alimenté électriquement, le rotor crée un champ magnétique qui transite par le corps du stator et qui crée un courant induit du type alternatif dans le bobinage induit du stator. Dans ces documents la tension du bobinage inducteur est pilotée par un régulateur de tension, qui appartient à un ensemble régulateur de tension-porte balais ; les balais frottant sur des bagues collectrices portées par l'extrémité arrière de l'arbre solidaire du rotor et reliées par des liaisons filaires aux extrémités du bobinage inducteur, appelé également bobinage d'excitation.
Le stator est dans ce cas un stator induit et le rotor un rotor inducteur.

Dans le document EP 0331 559 la structure de l'alternateur est inversée, le rotor étant alors configuré pour constituer un rotor induit comportant un corps portant un bobinage induit polyphasé, tandis que le stator est configuré pour constituer un stator inducteur comportant au moins un bobinage inducteur.

Dans tous les cas il faut redresser le courant induit du type alternatif produit dans le bobinage polyphasé de l'induit en un courant continu pour alimenter les consommateurs du réseau de bord et recharger la batterie dans le mode de réalisation décrit dans les documents WO 02/093717 et FR 2 819 350 ou pour alimenter électriquement les bobines du ralentisseur électromagnétique dans le cas du document EP 0331 559.

Le bobinage polyphasé de l'induit comporte au moins un enroulement par phase. Ces enroulements sont dans un mode de réalisation à fils continus ou en variante à épingles.
Le nombre de phases et d'enroulements dépend des applications.
Ainsi le nombre de phases peut varier de 3 à 7.
Chaque phase peut comporter un enroulement ou en variante deux enroulements par phase en sorte que dans certains modes de réalisation il peut être prévu deux ponts redresseurs de courant comme décrit et visible à la figure 6 du document EP 0 454 039.

Dans les documents WO 02/093717, FR 2 819 350 et EP 0 331 559 l'alternateur est du type triphasé à un enroulement par phase et les phases sont connectées de manière connue en triangle ou en étoile comme visible par exemple dans la figure 1 du document EP 0331 559.

Les sorties des phases sont reliées au pont redresseur de courant comportant des diodes. C'est par l'intermédiaire du pont redresseur de courant que l'on redresse le courant alternatif du bobinage induit en un courant continu.
Le pont redresseur est porté par le rotor dans le cas du document EP 0 331 559 ou par l'un des paliers appartenant au carter portant le corps du stator et également l'ensemble régulateur de tension- porte balais dans les documents WO 02/093717 et FR 2 819 350.
Ce pont redresseur comporte, entre deux potentiels, plusieurs branches en parallèle comportant chacune une paire de diodes montées en série comme visible dans la figure 1 du document EP 0331 559.
Chaque branche comporte une connexion destinée à être reliée électriquement à l'une des sorties de phase du bobinage induit polyphasé.
Le nombre de branches est fonction notamment du nombre de phases de l'alternateur.
L'une des branches du pont redresseur est visible à la figure 3 du document WO 02/093717 et à la figure 15 du document FR 2 819 350.

Plus précisément, en se reportant au circuit schématique phases- pont redresseur de la figure 1, dans lequel on a repris les références du document WO 02/093717, dans chaque branche du pont la cathode d'une diode 8 d'une paire de diodes 8, 10 est reliée électriquement à une première ligne d'alimentation électrique 9, 117, tandis que l'anode de l'autre diode 10 de la paire de diodes 8, 10 est reliée électriquement à une deuxième ligne d'alimentation électrique 3. L'anode de la diode 8 est reliée électriquement à la cathode de la diode 10. La sortie d'un enroulement 23 de l'une des phases est connectée à la liaison électrique entre l'anode de la diode 8 et la cathode de la diode 10, sachant que le potentiel de la première ligne d'alimentation électrique 9, 117 est supérieur au potentiel de la deuxième ligne d'alimentation électrique 3.

Les diodes comportent classiquement un corps, appelée également culot, comportant une partie principale massive prolongée axialement par un socle présentant à son extrémité libre une face de fixation pour un élément semi conducteur, à base de silicium et à jonction p-n, intercalé entre le socle et la tête d'un élément de connexion en forme de fil rigide appelé queue de diode ou axe de la diode. De la résine enrobe la tête de la queue de la diode et l'élément semi conducteur. Cette résine est solidaire du corps de la diode.
Le corps de la diode est moleté pour fixation de la diode par emmanchement à force dans un trou.

En se reportant à la figure 1 et aux documents WO 02/093717 et FR 2 819 350 on voit que la seconde ligne d'alimentation électrique comporte le fond 3 du palier arrière de l'alternateur relié à la masse du véhicule, les corps moletés des diodes 10, dites diodes négatives, étant chacun emmanché à force dans un trou du fond 3 du palier arrière, tandis que les corps moletés des diodes 8, dites diodes positives, sont chacun emmanché à force dans un trou d'un dissipateur de chaleur 9 portant une borne positive 117, dite borne B+, destinée à être reliée par un câble à la borne positive de la batterie. Le dissipateur 9 appartient donc à la première ligne d'alimentation électrique et le fond 3 à la deuxième ligne d'alimentation électrique. Les corps des diodes négatives 10 appartiennent aux anodes des diodes négatives tandis que les corps des diodes positives 8 appartiennent aux cathodes des diodes positives. Les queues des diodes 8, 10 sont reliées entre elles par des liaisons électriques appartenant à des traces d'un connecteur 13 configuré pour être relié aux sorties des phases 23. Ce connecteur présente pour ce faire des pattes 114 pour sa liaison électrique avec les sorties des phases.
La liaison est ici réalisée par sertissage les pattes 114 étant configurées en conséquence. En variante la liaison est réalisée par soudage.

Dans ce document WO 02/093717 le connecteur 13 en forme de plaque est intercalé entre le fond 3 du palier arrière et le dissipateur de chaleur 9. Ce connecteur comporte un corps en matière plastique dans lequel sont noyées les traces électriquement conductrices apparentes localement à certains endroits pour réaliser les liaison électriques notamment avec les queues des diodes 8, 10 et avec les sorties des phases 23.
Chaque branche du pont comporte donc entre sa paire de diodes un point de connexion pour sa liaison électrique avec une sortie de l'une des phases.
Le pont redresseur comporte dans cet exemple de réalisation deux dissipateurs de chaleur 3, 9 pour montage respectivement des diodes négatives 10 et des diodes positives 8.

Normalement les diodes positives 8 s'opposent au passage du courant en sorte que la batterie ne risque pas de se décharger.

Ces diodes sont comparables à un clapet anti-retour car elles laissent passer le courant dans le sens direct et bloquent le courant dans l'autre sens.

Dans le sens direct la diode est conductrice pour une tension supérieure à une tension de seuil. Dans le sens inverse la diode n'est pas conductrice. Bien entendu lorsque la diode est non conductrice il ne faut pas dépasser une tension, dite tension de claquage, car dans ce cas la diode est détruite.

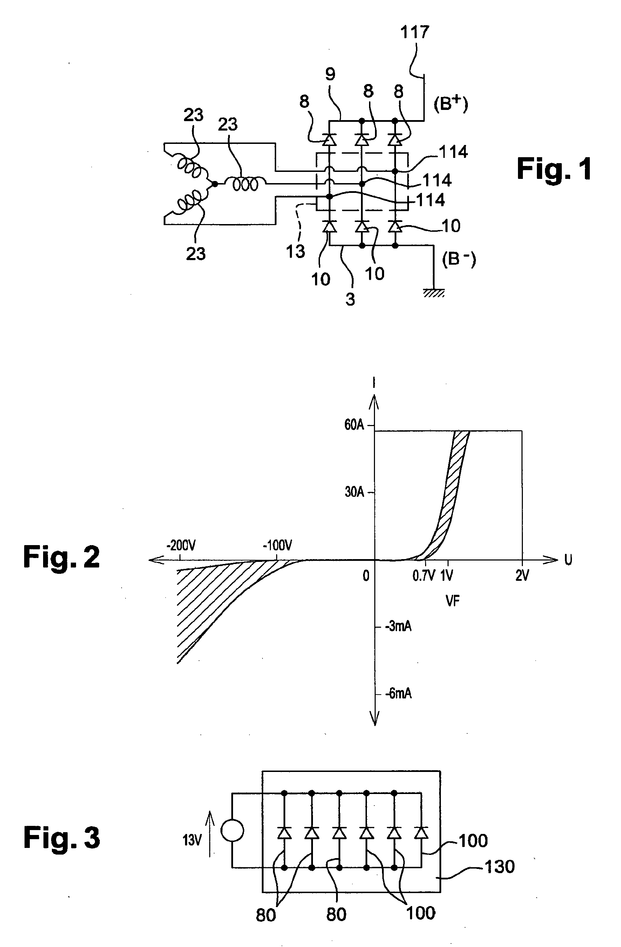

Pour plus de précisions on se reportera à la figure 2, qui est une courbe caractéristique (Courant I en fonction de la tension U) d'une diode au silicium semblable à la courbe caractéristique de la page 22 de l'ouvrage « Circuit de charge » édition ETAI de avril 1995.

Dans cette figure on voit que la tension seuil Vf est égale à 0,7V. La diode est passante à partir de 0, 7V. Les zones hachurées correspondent à des zones de tolérance.

La courbe caractéristique de la diode est fonction de la température. Plus précisément lorsque la température augmente, plus un courant de fuite circulant en sens inverse apparaît.

Avec des diodes classiques à tension de seuil Vf de 0, 7V ces courants de fuite sont négligeables.

En outre grâce à la présence de ou des ventilateurs on provoque une circulation d'air pour refroidir l'alternateur, notamment le pont redresseur de courant configuré en conséquence, afin de trouver un équilibre non dangereux. On augmente ainsi les performances de l'alternateur.

Ainsi qu'il ressort de la figure 2 les pertes des diodes dans le sens direct (sens de conduction) sont proportionnelles à la tension de seuil et au courant moyen.

Pour augmenter encore les performances et le rendement de l'alternateur de l'alternateur on peut songer à utiliser des diodes à tension de seuil plus basse, telles que des diodes à faible fuite, dites diodes LLD (low leakage diodes en anglais).

En pratique plus la tension de seuil est basse plus les courants de fuite sont importants en sorte que ces courants de fuite sont à prendre en considération notamment lorsque la température augmente.
Cette augmentation de la température peut avoir des conséquences lorsque l'on arrête le véhicule et qu'on le laisse en stationnement, car l'alternateur n'est alors plus ventilé en sorte que les courants de fuite peuvent vider au moins en partie la batterie.

### Objet de l'invention

La présente invention a pour objet d'augmenter le rendement de l'alternateur en utilisant des diodes à tension de seuil faible tout en limitant les courants de fuite.

Suivant l'invention un pont redresseur de courant du type sus indiqué est caractérisé en ce que l'une au moins de ses branches comporte deux diodes à tension de seuil inférieure à 0, 7V, en ce que l'une des diodes, dite première diode, présente une tension de seuil inférieure à la tension de seuil de l'autre diode, dite seconde diode, et en ce que le courant de fuite de la seconde diode est inférieure au courant de fuite de la première diode.

Suivant l'invention un alternateur, notamment de véhicule automobile est caractérisé en ce qu'il comporte au moins un tel pont redresseur de courant.

Grâce à l'invention la seconde diode, montée en série avec la première diode, limite le courant de fuite totale de la branche tout en ayant un gain en rendement de l'alternateur car la tension de seuil de chaque diode est diminuée.

Suivant une autre caractéristique, le pont redresseur comportant deux dissipateurs de chaleur dont l'un est configuré pour être plus froid lorsque l'alternateur fonctionne, la deuxième diode est montée sur le dissipateur de chaleur le plus froid et la première diode sur le dissipateur de chaleur le plus chaud.

Ainsi la zone de fixation de la deuxième diode est plus froide que la zone de fixation de la première diode. La deuxième diode présente un courant de fuite encore plus limité car elle s'échauffe moins que si elle était montée sur l'autre dissipateur, sachant que le courant de fuite dépend de la température.
Cette disposition permet de limiter encore les courant de fuite de la seconde diode et donc de la paire de diode.

D'autres avantages apparaîtront dans la description qui va suivre en regards des dessins annexés.

### Brève description des dessins

- la figure 1 est une vue schématique du circuit phases - pont redresseur de courant de l'art antérieur avec reprise des références du document WO 02/093717 ;
- la figure 2 représente la courbe caractéristique d'une diode de l'art antérieur avec en abscisse la tension U en Volts et en ordonnée le courant I en Ampères.
- les figure 3 est une vue schématique représentant les diodes selon l'invention alimentées avec une tension de 13V et montées dans une enceinte thermique dont la température varie pour effectuer des mesures des courants de fuite des diodes ;
- les figures 4 et 5 sont des courbes caractéristiques analogues à la figure 2 respectivement des premières et secondes diodes selon l'invention ;
- la figure 6 est une vue analogue à la figure 1 sans la représentation de la totalité des phases de l'alternateur polyphasé.

### Exemples de réalisation de l'invention

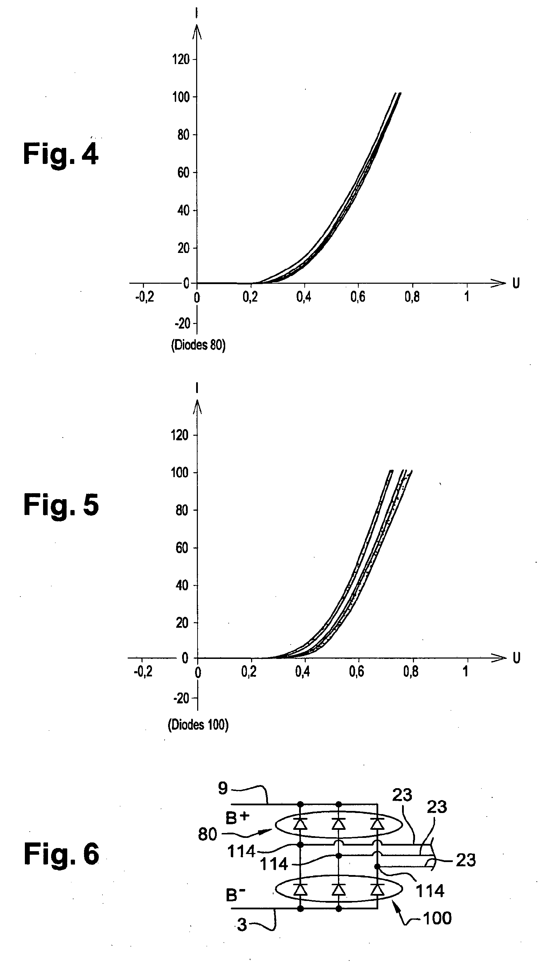

Dans les figures 3 à 6 on a représenté que les éléments essentiels à la compréhension de l'invention et les éléments communs aux figures seront affectés des mêmes signes de références.
Ainsi dans la figure 6 on a représenté schématiquement les deux dissipateurs de chaleurs 9, 3 que comporte le pont redresseur de courant à trois branches du type de celui du document WO/02/093717. Ce pont est porté de manière précitée par le fond du palier arrière de l'alternateur à stator induit et rotor inducteur.

Pour mémoire on rappellera que, lorsque l'alternateur fonctionne, dans le document WO/02/093717 les diodes négatives 10, montées dans le fond 3 du palier arrière du carter de l'alternateur formant dissipateur de chaleur, sont moins chaudes que les diodes positives 8 montées dans le dissipateur de chaleur 9. Cela est provient du fait que la palier arrière, usuellement à base d'aluminium, a une plus grande taille que le dissipateur 9.
Les zones de fixation des diodes négatives 10 sont donc moins chaudes que les zones de fixation des diodes positives 8.

Suivant une caractéristique de l'invention il est tiré partie de cette différence de température de manière décrite ci-après.

Dans les figures 3 à 6, selon une caractéristique, on remplace dans au moins une des branches du pont une diode positive 8 et une diode négative 10 des figures 1 et 2 par respectivement une première diode positive 80 et une seconde diode négative 100 à haut rendement pour augmenter le rendement de l'alternateur polyphasé.

Avantageusement cela est réalisé dans toutes les branches du pont, comme représenté schématiquement à la figure 6, pour augmenter encore plus le rendement de l'alternateur polyphasé, sachant que les diodes classiques sont à courant de fuite négligeable en toute circonstance.

Les diodes 80, 100 ont la même forme que les diodes 8 et 10 des figures 1 et 2. Plus précisément elles présentent un corps moleté et une queue comme les diodes 8, 10. Elles se montent en lieu et place des diodes 8, 10 en sorte que la structure du pont redresseur de courant n'est pas modifiée. Le dissipateur de chaleur 9 et le fond 3 du palier arrière ne sont pas modifiés.
Par contre l'élément semi conducteur des diodes 80, 100 est modifié.
Les diodes 80, 100 sont ici des diodes du type LLD, c'est-à-dire des diodes à faible fuite (low leakage diodes en anglais) qui réduisent la dissipation de chaleur. Ces diodes LLD sont utilisées pour leurs propriétés notamment dans les circuits intégrés, tels ceux décrits dans le document US 4 887 142.
Les diodes 80, 100 sont donc des diodes qui réduisent la dissipation de chaleur.

Selon une caractéristique de l'invention les diodes 80 et 100 de la paire de diodes d'au moins une branche du pont, présentent chacune une tension de seuil Vf inférieure à 0, 7V pour diminuer les pertes des diodes et augmenter les performances et le rendement de l'alternateur.

Dans un mode de réalisation cette tension de seuil Vf est inférieure ou égale à 0, 6V.

Suivant une autre caractéristique l'une des diodes 80, 100 d'une paire de diodes, dite diode à très faible Vf, d'une branche du pont présente une tension de seuil Vf inférieure à l'autre diode 100, 80, dite diode à faible Vf.

Dans le mode de réalisation de s figures 3 à 6 les diodes positives 80, dites premières diodes, présentent une tension de seuil inférieure à l'autre série de diodes, ici les diodes négatives 100 dites secondes diodes.

Comme visible dans les figures 4 et 5 les premières diodes 80 présentent (figure 4) une tension de seuil Vf globalement égale à 0, 35V, tandis que les secondes diodes 100 présentent (figure 5) une tension de seuil Vf globalement égale à 0, 45V.

Les diodes 80 sont donc des diodes à très faible Vf et les diodes 100 des diodes à faible Vf

Suivant une autre caractéristique, les courants de fuites des secondes diodes 100 sont inférieurs aux courants de fuites des premières diodes 80.

Plus précisément en plaçant les diodes du type LLD alimentées sous 13V dans l'enceinte 130 à température pilotable on obtient à l'aide d'un ampère mètre les résultats suivants (les courants de fuites étant en milli Ampères).

Ici les diodes sont des diodes SBR (Super Barrier Rectifier en Anglais- marque déposée par Diodes Incorporated).

**Diode 80 à très faible Vf :**

| Température enceinte (°C) : | 140 | 150 | 160 | 170 | 180 | 190 |
|---|---|---|---|---|---|---|
| Courant de fuites sur tout le pont (mA) : | 100 | 150 | 220 | 370 | 630 | Emballement |

**Diode 100 à faible Vf :**

| Température enceinte (°C) : | 140 | 150 | 160 | 170 | 180 | 190 | 200 |
|---|---|---|---|---|---|---|---|
| Courant de fuites sur tout le pont (mA) : | 5 | 8 | 13 | 20 | 31 | 47 | 71 |

Le courant de fuite des premières diodes 80 devient important et pour 190° on constate un emballement. Autrement dit lorsque l'on arrête le moteur du véhicule automobile, par exemple au parking, on arrête également la ventilation en sorte que les diodes 80 peuvent conduire à l'envers (courant de fuite) et vider la batterie.

Par contre les diodes 100 présentent un faible courant de fuite.

Suivant une caractéristique de l'invention la branche, dans la figure 6 chaque branche, du pont redresseur de courant comporte une première diode 80 à très faible Vf (tension de seuil) et fort courant de fuite associée à une seconde diode 100 à faible Vf (tension de seuil) et faible courant de fuite.
Ces diodes étant montées en série dans la branche, la diode 100 à faible courant de fuite devient prépondérante par rapport à l'autre diode 80 à plus fort courant de fuite et limite les courant de fuite dans la branche

Grâce à l'invention on obtient un meilleur rendement du fait que les diodes 80, 100 ont un plus faible Vf tout en minimisant les courants de fuite.

Plus précisément grâce aux deuxièmes diodes 100 ont limite les courants de fuite et on évite une décharge de la batterie.

Bien entendu en variante on peut utiliser des diodes JBR à jonction du type Schottky (Jonction Barrier Schottky en Anglais).

La limite de la tension de seuil de la diode 80 à très faible VF dépend de la technologie. Elle peut être égale à 0, 2V.

Le fait que les secondes diodes 100 soient montées ici sur le fond du palier 3 plus froid que le dissipateur limite encore les courants de fuite des diodes 100 carde manière précitée le courant de fuite est très dépendant de la température. Cette disposition permet d'accentuer encore la limitation des courants de fuite.

Dans la figure 6 le dissipateur 9 est au potentiel B+ car de manière précitée il est destiné à être relié électriquement par un câble à la borne positive de la batterie du véhicule dont la tension est usuellement de 12V. Le potentiel du fond du palier est B- car de manière précitée le palier est destiné relié électriquement à la masse. Bien entendu en variante les diodes négatives ne sont pas montées directement dans le palier mais sur un dissipateur négatif solidaire du palier arrière. Une isolation électrique peut intervenir entre ce dissipateur et le palier arrière en sorte que les diodes 100 ne sont pas forcément au potentiel de la masse.

Les trois branches du pont sont parallèles et agissent entre deux potentiels. Chaque branche comporte une paire de diodes montées en série et un point de connexion 114 destiné à être relié électriquement à l'une des sorties des phases du bobinage polyphasé induit.

Bien entendu la présente invention n'est pas limitée aux exemples de réalisations décrits.

On peut inverser les structures. Ainsi dans le cas d'un alternateur du type de celui du document FR 2 827 437 on montera les premières diodes 80 dans le palier arrière et les secondes diodes 100 dans le dissipateur de chaleur des diodes positives car celui-ci est plus froid que le palier arrière du fait de la ventilation à deux flux de ce dissipateur de chaleur et de la configuration à ailettes de refroidissement de celui-ci.

Les premières diodes peuvent donc être des diodes positives ou négatives. De même les secondes diodes peuvent être des diodes négatives ou positives. Tous dépend de la température de la zone de montage des diodes et de la température du dissipateur de chaleur lorsque l'alternateur fonctionne.

Bien entendu le pont redresseur de courant ne comporte pas forcément un connecteur du type de celui du document WO 02/093717. Ainsi en variante les diodes d'une même paire de diodes peuvent appartenir à un même module comportant un support à dissipateur de chaleur comme décrit dans le document FR 2 911 017 auquel on se reportera. Le support à dissipateur de chaleur, sur lequel est montée la paire de diodes, constitue l'une des branches du pont. Ainsi la cathode de la diode négative et l'anode de la diode positive sont montées sur le support à dissipateur de chaleur comme visible dans la figure 8 de ce document FR 2911 017.
Le support à dissipateur de chaleur est alors monté à isolation électrique par rapport au palier arrière. Dans ce cas les premières et secondes diodes sont globalement à la même température. On notera que chaque branche du pont et donc chaque support à dissipateur de chaleur, comporte un point de connexion pour sa liaison avec la sortie de phase. Cette connexion peut être réalisé par soudage ou à l'aide d'une rondelle.
Le point de connexion est donc réalisé par tous moyens, pattes de sertissage ou de soudage, soudage ou collage électriquement conducteur sur un support, rondelle métallique et vis.

Bien entendu le support des diodes peut se réduire à une simple plaque comme visible à la figure 1 de ce document FR 2 911 017.

A la lumière de ce document FR 2 911 017 on voit que le nombre de phases de l'alternateur peut être de manière précitée supérieur à trois, par exemple à six, et que l'alternateur peut comporter deux ponts redresseurs de courant comme décrit dans le document EP 0 454 039.
Le pont redresseur peut comporter une branche supplémentaire pour redresser le point neutre d'un montage en triangle des phases. Bien entendu des montages en triangle et en étoile sont possibles comme visible par exemple à la figure 21 du document EP 0 454 039.
Dans le cas d'un alternateur à cinq phases et à sept phases, le pont redresseur comporte respectivement cinq et sept branches.
Bien entendu lorsque le nombre de branches du pont est par exemple de 4 ou 6 on peut équiper seulement la moitié des branches du pont.
Dans tous les cas au moins l'une des branches du pont est équipée d'une paire de diodes à faible Vf selon l'invention.

Bien entendu l'invention est applicable à l'alternateur polyphasé inversé du document EP 0 331 559 précité. Le bobinage polyphasé relié au pont redresseur de courant peut donc appartenir à un stator induit ou à un rotor induit.

Bien entendu dans le cas d'un alternateur à stator induit on peut monter le ou les ponts redresseurs de courant sur le palier avant comme divulgué dans le document FR 2 744 575, qui montre qu'en variante l'alternateur est sans balais et que les moyens de refroidissement de l'alternateur comportent en variante une pompe centrifuge à la place d'un ventilateur. Bien entendu en variante l'alternateur est refroidit au moins en partie par circulation d'un liquide.

En variante l'alternateur est sans balais et comporte un pont redresseur de courant porté par un rotor inducteur et un pont redresseur de courant porté par le carter d'un stator induit.

Plus précisément l'alternateur inversé du document EP 0 331 559 peut servir à alimenter en courant continu au moins un bobinage inducteur d'un rotor inducteur d'un autre alternateur comportant un stator induit associé à un autre pont redresseur de courant porté par le carter du stator induit portant également le stator inducteur de l'alternateur inversé.
L'une au moins des branches de ces ponts redresseur est équipée des diodes selon l'invention.
Bien entendu l'un de ces ponts peut présenter un nombre de branches supérieur à l'autre.
En variante les diodes peuvent être fixées par brasage ou tout autre moyen sur le pont redresseur.

En variante les diodes sont du type de celles décrites en relation au mode de réalisation de la figure 1 du document FR 2 911 017 en sorte que les diodes sont dans un mode de réalisation dépourvues de queues.

Bien entendu selon les applications et la technologie des diodes (SBR et JBR par exemple) on peut utiliser des diodes 80 et 100 ayant un Vf inférieur respectivement à 0, 35V et 0, 45V

## Revendications

1. Pont redresseur de courant alternatif en courant continu pour alternateur polyphasé, notamment de véhicule automobile, doté d'un bobinage induit polyphasé comprenant des sorties de phase, du type comprenant plusieurs branches en parallèles comprenant chacune une paire de diodes (80, 100) montées en série et un point de connexion (114) destinée à être reliée à l'une des sorties des phases (23) du bobinage d'induit, **caractérisé en ce que** l'une au moins de ses branches comporte deux diodes (80, 100) à tension de seuil (Vf) inférieure à 0, 7V, **en ce que** l'une des diodes (80), dite première diode, présente une tension de seuil inférieure à la tension de seuil de l'autre diode (100), dite seconde diode, et **en ce que** le courant de fuite de la seconde diode (100) est inférieure au courant de fuite de la première diode (80).

2. Pont redresseur selon la revendication 1, **caractérisé en ce que** toutes les branches du pont redresseur sont équipées d'une première diode (80) et d'une seconde diode (100).

3. Pont redresseur selon la revendication 1 ou 2, **caractérisé en ce que** la première et la seconde diode sont des diodes LLD à faible fuite.

4. Pont redresseur selon l'une quelconque des revendications précédentes, **caractérisée en ce que** la tension de seuil (Vf) de chaque diode est inférieure ou égale à 0, 6V.

5. Pont redresseur selon la revendication 4, **caractérisé en ce que** la tension de seuil de la première diode (80) est globalement égale à 0, 35V, tandis que la tension de seuil de la seconde diode (100) est globalement égale à 0, 45 V

6. Pont redresseur selon l'une quelconque des revendications précédentes, **caractérisé en ce qu'**il comporte deux dissipateurs de chaleur (3, 9) dont l'un est configuré pour être plus froid lorsque l'alternateur fonctionne et **en ce que** la deuxième diode (100) est montée sur le dissipateur de chaleur (3) le plus froid tandis que la première diode (80) est montée sur le dissipateur de chaleur le plus chaud.

7. Pont redresseur selon l'une quelconque des revendications précédentes, **caractérisé en ce qu'**il comporte au moins trois branches.

8. Alternateur, notamment de véhicule automobile, **caractérisé en ce qu'**il comporte au moins un pont redresseur'de courant selon l'une quelconque des revendications 1 à 7.

9. Alternateur selon la revendication 8, **caractérisé en ce qu'**il consiste en un alternateur à ventilation interne doté d'un carter portant un stator à bobinage induit polyphasé et doté d'un palier (3) portant le pont redresseur de courant relié aux sorties des phases du bobinage induit.

10. Alternateur selon la revendication 8, **caractérisé en ce qu'**il comporte un stator inducteur et un rotor à bobinage induit polyphasé relié au pont redresseur de courant.

## Patentansprüche

1. Wechselstrom/Gleichstrom-Gleichrichterbrücke für mehrphasigen Wechselstromgenerator, insbesondere für Kraftfahrzeug, der mit einer mehrphasigen Sekundärwick-lung versehen ist, die Phasenausgänge aufweist, des Typs mit mehreren parallelen Zweigen, wovon jeder ein Diodenpaar (80, 100), die in Serie geschaltet sind, und einen Verbindungspunkt (114), der dazu bestimmt ist, mit einem der Phasenausgänge (23) der Sekundärwicklung verbunden zu werden, umfasst, **dadurch gekennzeichnet, dass** wenigstens einer der Zweige zwei Dioden (80, 100) mit einer Schwellenspannung (Vf) kleiner als 0,7 V umfasst, dass eine der Dioden (80), die erste Diode genannt wird, eine Schwellenspannung kleiner als die Schwellenspannung der anderen Diode (100), die zweite Diode genannt wird, besitzt und dass der Verluststrom der zweiten Diode (100) kleiner als der Verluststrom der ersten Diode (80) ist.

2. Gleichrichterbrücke nach Anspruch 1, **dadurch gekennzeichnet, dass** alle Zweige der Gleichrichterbrücke mit einer ersten Diode (80) und einer zweiten Diode (100) ausgerüstet sind.

3. Gleichrichterbrücke nach Anspruch 1 oder 2, **dadurch gekennzeichnet, dass** die erste und die zweite Diode LLD-Dioden mit geringem Verlust sind.

4. Gleichrichterbrücke nach einem der vorhergehenden Ansprüche, **dadurch gekennzeichnet, dass** die Schwellenspannung (Vf) jeder Diode kleiner oder gleich 0,6 V ist.

5. Gleichrichterbrücke nach Anspruch 4, **dadurch gekennzeichnet, dass** die Schwellenspannung der ersten Diode (80) im Allgemeinen gleich 0,35 V ist, während die Schwellenspannung der zweiten Diode (100) im Allgemeinen gleich 0,45 V ist.

6. Gleichrichterbrücke nach einem der vorhergehenden Ansprüche, **dadurch gekennzeichnet, dass** sie zwei Wärmeabführungseinrichtungen (3, 9) umfasst, wovon eine konfiguriert ist, kälter zu sein, wenn der Wechselstromgenerator arbeitet, und dass die zweite Diode (100) an der kältesten Wärmeabführungseinrichtung (3) angebracht ist, während die erste Diode (80) an der wärmsten Wärmeabführungseinrichtung angebracht ist.

7. Gleichrichterbrücke nach einem der vorhergehenden Ansprüche, **dadurch gekennzeichnet, dass** sie wenigstens drei Zweige umfasst.

8. Wechselstromgenerator, insbesondere für Kraftfahrzeug, **dadurch gekennzeichnet, dass** er wenigstens eine Stromgleichrichterbrücke nach einem der Ansprüche 1 bis 7 umfasst.

9. Wechselstromgenerator nach Anspruch 8, **dadurch gekennzeichnet, dass** er aus einem Wechselstromgenerator mit interner Belüftung besteht, der mit einem Gehäuse, das einen Stator mit mehrphasiger Sekundärwicklung trägt, und mit einem Lager (3), das die Stromgleichrichterbrücke trägt, die mit den Phasenausgängen der Sekundärwicklung verbunden ist, versehen ist.

10. Wechselstromgenerator nach Anspruch 8, **dadurch gekennzeichnet, dass** er einen Primärstator und einen Rotor mit mehrphasiger Sekundärwicklung, die mit der Stromgleichrichterbrücke verbunden ist, umfasst.

## Claims

1. Alternating current to direct current rectifier bridge for polyphase alternator, notably of a motor vehicle, provided with a polyphase armature winding comprising phase outputs, of the type comprising a plurality of parallel branches each comprising a pair of diodes (80, 100) mounted in series and a connection bridge (114) intended to be linked to one of the outputs of the phases (23) of the armature winding, **characterized in that** at least one its branches comprises two diodes (80, 100) with threshold voltage (Vf) lower than 0.7 V, **in that** one of the diodes (80), called first diode, exhibits a threshold voltage lower than the threshold voltage of the other diode (100), called second diode, and **in that** the leakage current of the second diode (100) is lower than the leakage current of the first diode (80).

2. Rectifier bridge according to Claim 1, **characterized in that** all the branches of the rectifier bridge are equipped with a first diode (80) and a second diode (100).

3. Rectifier bridge according to Claim 1 or 2, **characterized in that** the first and the second diodes are low-leakage LLD diodes.

4. Rectifier bridge according to any one of the preceding claims, **characterized in that** the threshold voltage (Vf) of each diode is less than or equal to 0.6 V.

5. Rectifier bridge according to Claim 4, **characterized in that** the threshold voltage of the first diode (80) is globally equal to 0.35 V, whereas the threshold voltage of the second diode (100) is globally equal to 0.45 V.

6. Rectifier bridge according to any one of the preceding claims, **characterized in that** it comprises two heat dissipaters (3, 9), one of which is configured to be colder when the alternator is working and **in that** the second diode (100) is mounted on the coldest heat dissipater (3) whereas the first diode (80) is mounted on the hottest heat dissipater.

7. Rectifier bridge according to any one of the preceding claims, **characterized in that** it comprises at least three branches.

8. Alternator, notably of a motor vehicle, **characterized in that** it comprises at least one current rectifier bridge according to any one of Claims 1 to 7.

9. Alternator according to Claim 8, **characterized in that** it consists of an alternator with internal ventilation provided with a housing bearing a stator with polyphase armature winding and provided with a bearing (3) bearing the current rectifier bridge linked to the outputs of the phases of the armature windings.

10. Alternator according to Claim 8, **characterized in that** it comprises an inductive stator and a rotor with polyphase armature winding linked to the current rectifier bridge.
